# EUROPÄISCHE PATENTSCHRIFT

(11) **EP 1 438 203 B1**
(45) Veröffentlichungstag und Bekanntmachung des Hinweises auf die Patenterteilung: **04.03.2009**
(21) Anmeldenummer: 02777128.6
(22) Anmeldetag: 17.09.2002
(51) Int. Cl.: B60B 39/04

(54) **DOSIEREINRICHTUNG FÜR SANDSTREUGERÄTE, INSBESONDERE FÜR SCHIENENFAHRZEUGE**
DOSING DEVICE FOR SANDING DEVICES, ESPECIALLY FOR RAIL VEHICLES
DISPOSITIF DE DOSAGE POUR DES DIFFUSEURS DE SABLE, NOTAMMENT POUR DES VEHICULES SUR RAILS

(30) Priorität: 16.10.2001 AT 16382001
(43) Veröffentlichungstag der Anmeldung: 21.07.2004
(73) Patentinhaber: FAIVELEY TRANSPORT, 93200 Saint-Denis (FR)
(72) Erfinder: BARTLING, Werner, 31008 Elze (DE)
(74) Vertreter: Sonn & Partner Patentanwälte
(86) Internationale Anmeldenummer: PCT/EP2002/010412
(87) Internationale Veröffentlichungsnummer: WO 2003/033279

(56) Entgegenhaltungen:
- CH-A- 423 860
- DE-A- 1 480 718
- DE-A- 19 547 746

## Beschreibung

Die Erfindung betrifft eine Dosiereinrichtung für Sandstreugeräte, insbesondere für Schienenfahrzeuge zum Sand streuen zwischen Rad und Schiene nach dem Oberbegriff des Anspruches 1.

Bei den bekannten Sandstreugeräten dieser Art erfolgt der Sandfluss aus einem Vorratsbehälter für den Sand zum Rad über ein Gehäuse mit einer Durchflussbohrung, wobei die Durchflussmenge bzw. der Durchflussstrahl für den Sandfluss durch einen Dosierkolben gesteuert wird, welcher elektrisch, pneumatisch oder in anderer Weise gesteuert wird und die Größe der Durchflussöffnung von 0 bis zu einem vorgegebenen Wert regelt. Bei geschlossenem Dosierkolben sitzt dieser mit einer stirnseitigen Dichtung am Öffnungsrand der Durchflussbohrung auf und öffnet diese beim Zurückziehen des Kolbens. Der Öffnungsspalt wird in Abhängigkeit von der verwendeten Sandkörnung zur Vermeidung von Brückenbildungen auf den notwendigen Mindestspalt voreingestellt und somit auch zwangsläufig im Zusammenhang mit dem ringförmigen Öffnungsspalt eine zufällige Sandmenge vorbestimmt. Dieses System war jedoch für bestimmte Sandförderungen, insbesondere pneumatische Sandförderungen, nicht gänzlich zufriedenstellend, da die Sandmengen nur in relativ großen Toleranzen einstellbar sind, so dass definiert kleine Sandmengen mit dem bekannten System in bestimmten Fällen nur ungenügend erreichbar sind.

Eine Dosiereinrichtung der eingangs erwähnten Art ist durch die DE 195 47 746 A bekannt geworden. Das bekannte Streugerät besteht aus einem Vorratsbehälter, einer Dosiereinrichtung sowie einer darunter gelegenen von der Dosiereinrichtung getrennten Austragseinrichtung, welche druckluftbetätigt ist und als Injektor in spezieller Geometrie ausgebildet ist. Aufgabe des bekannten Streugerätes ist die Schaffung einer Maßnahme zur Trennung der Dosierung des Sandes von der Förderung, so dass keine Feuchtigkeit in den Sandbehälter und in die daran anschließende Förderleitung eindringen kann.

Demgegenüber ist Aufgabe der vorliegenden Erfindung, Maßnahmen zu treffen, durch welche eine Förderung auch kleiner Sandmengen einstellbar ist.

Diese Aufgabe wird durch die Maßnahme nach dem kennzeichnenden Teil des Anspruches 1 gelöst.

Nach einem weiteren Merkmal der Erfindung erstreckt sich der labyrinthartige Abschnitt quer zur Durchflussrichtung.

Nach einem weiteren Merkmal der Erfindung ist bei Anordnung des Dichtungsprofils sowohl am Gehäuse als auch am Dosierkolben bei maximalem Dosierkolbenöffnungshub eine Überdeckung zwischen Gehäuse- und Dichtungsprofil vorhanden.

Weitere Merkmale der Erfindung werden anhand der Zeichnungen näher erläutert in welchen die
Fig. 1 und 2 das bekannte Dosierkolbendichtungssystem bei geschlossenem und offenem Dosierkolben; die
Fig. 3 und 4 das erfindungsgemäße Dosierkolbendichtungssystem in zwei zueinander senkrechten Querschnitten bei geschlossenem Dosierkolben; die
Fig. 5 und 6 bei geöffnetem Dosierkolben; und die
Fig. 7 und 8 einen lotrechten Schnitt durch den Dosierkolben bzw. einen Schnitt nach der Linie VIII-VIII der Fig. 7 zeigen.

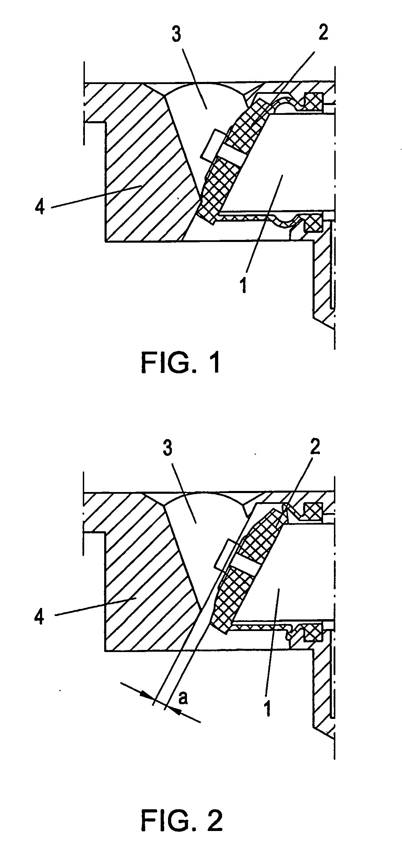

In den Fig. 1 und 2 ist mit 1 der Dosierkolben, mit 2 die Dosierkolbendichtung, mit 3 die Sanddurchflussbohrung, und mit 4 das Gehäuse bezeichnet, in welchem sich die Sanddurchflussbohrung 3 befindet. Bei geschlossenem Dosierkolben sitzt die Dosierkolbendichtung 2 am Ausflussrand der Durchflussbohrung 3 auf. Gelangt der Dosierkolben 1 in die in Fig. 2 dargestellte Öffnungslage, bildet sich ein ringförmiger Öffnungsspalt a mit einem ringförmigen Durchflusskanal.

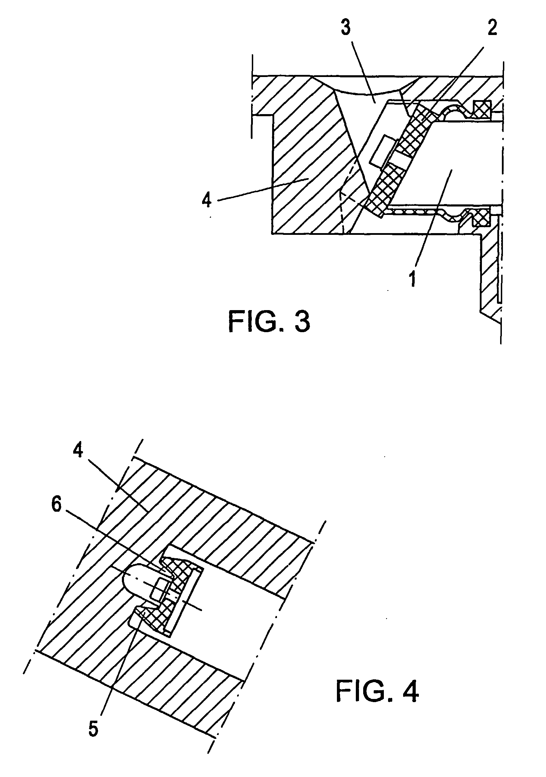

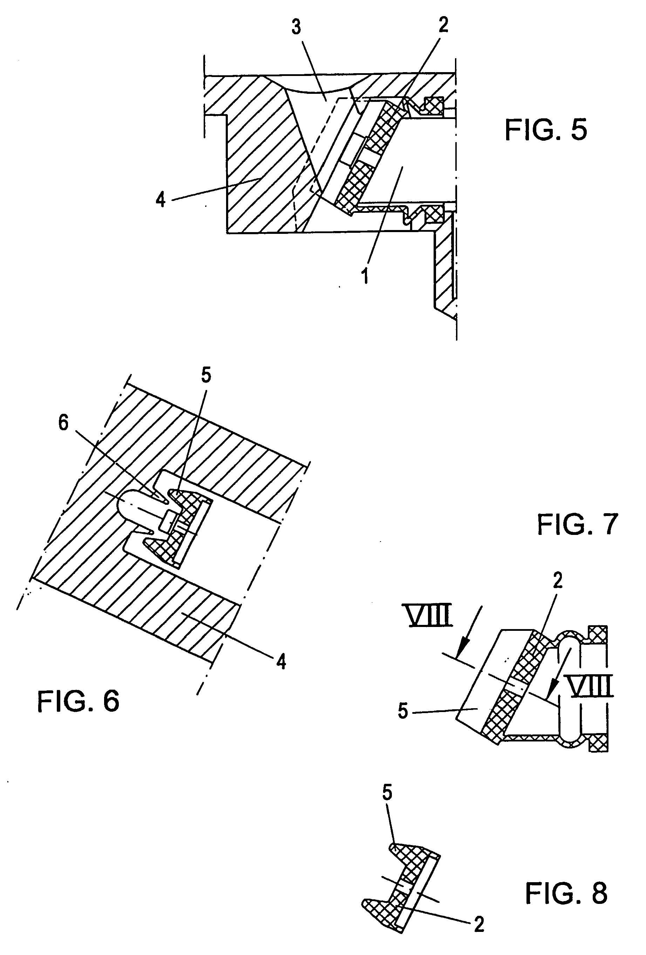

Beim erfindungsgemäßen Dosierkolben nach den Fig. 4 bis 8 ist die Dosierkolbendichtpng 2 mit einem auskragenden, ringförmigen Profil 5 versehen, welchem ein korrespondierendes Profil 6 an der Gehäusewand 4 gegenübersteht, wobei das Profil 5 der Dosierkolbendichtung 2 das Profil 6 des Gehäuses 4 umschließt, und die beiden Profile auch bei geöffnetem Dosierkolben nach Fig. 5 und 6 eine ausreichende Überdeckung bilden und eine labyrinthartige Sandauslauföffnung 7 ergeben.

Bei der erfindungsgemäßen Sanddurchlauföffnung wird im Gehäuse der Dosier- und Absperröffnung die ursprünglich als Bohrung ausgestaltete Sanddurchlassöffnung in einen schlitzförmigen Querschnitt verändert, wodurch der Vorteil erzielt wird, dass sich die im unteren Sandauslaufbereich bildende Sandauslassöffnung in der Fläche gleichmäßig linear in Abhängigkeit mit dem Dosierkolbenöffnungshub verändert.

Die Schlitzbreite der Sanddurchlassöffnung im Gehäuse der Dosier- und Absperreinrichtung ist bezüglich einer minimalen Sandmenge auf ein Minimum reduziert und die Schlitzlänge bezüglich einer maximalen Sandmenge dazu angepasst worden, so dass bei den als typisch anzusehenden Sandqualitäten ein sicherer Sanddurchfluss in den genannten Mengentoleranzen erreicht wird.

Die Schlitzbreite im Zusammenhang mit dem eingestellten Öffnungshub des Dosierkolbens (Abstand der Dosierkolben-Dichtfläche zur Gehäuse-Dichtfläche) bestimmt die effektive Sandauslassöffnung. Sie definiert auch im Wesentlichen die Ansaugfläche im Zusammenhang mit der Injektorwirkung.

Die klassische Form der Profile kann, wie Fig. 6 zeigt, ringförmig mit dreieckförmigem Querschnitt nach außen im Wesentlichen spitz auslaufend ausgebildet sein. Es ist aber jede andere Profilgestaltung, sei es als einheitlicher oder unterbrochener Ring, möglich.

Durch die erfindungsgemäße Dosiereinrichtung ist eine stufenlos einstellbare Sandmenge wie bei einem linear bewegten Schieber möglich, ohne den bei einem Schieber auftretenden Verschleiß und Energieaufwand.

## Patentansprüche

1. Dosiereinrichtung für Sandstreugeräte, insbesondere für Schienenfahrzeuge zum Aufbringen von Streugut zwischen Rad und Schiene unter Verwendung eines den Durchflusskanal in einer Durchflussbohrung regelnden verschiebbaren Dosierkolbens, **dadurch gekennzeichnet, dass** in der Durchflussbohrung ein labyrinthartiger Abschnitt vorgesehen ist, wobei der labyrinthartige Abschnitt durch ein Profil (5) auf der Dichtungsfläche (2) des Dosierkolbens (1) und ein korrespondierendes Profil (6) an der gegenüberliegenden Gehäusewand (4) der Sanddurchlassöffnung (3) ausgebildet ist.

2. Dosiereinrichtung nach Anspruch 1, **dadurch gekennzeichnet, dass** sich der labyrinthartige Abschnitt quer zur Durchflussrichtung erstreckt.

3. Dosiereinrichtung nach Anspruch 1, **dadurch gekennzeichnet, dass** bei Anordnung des Dichtungsprofils (5 bzw. 6) sowohl am Gehäuse (4) als auch am Dosierkolben (2) beim Dosierkolbenöffnungshub eine Überdeckung zwischen Gehäuse- und Dichtungsprofil (5 bzw. 6) vorhanden ist.

4. Dosiereinrichtung nach Anspruch 3, **dadurch gekennzeichnet, dass** bei Anordnung des Dichtungsprofils (5 bzw. 6) sowohl am Gehäuse (4) als auch am Dosierkolben (2) bei maximalem Dosierkolbenöffnungshub eine Überdeckung zwischen Gehäuse- und Dichtungsprofil (5 bzw. 6) vorhanden ist.

## Claims

1. Metering device for sand spreading apparatuses, especially for rail vehicles, for applying spread materials between wheel and rail, using a displaceable metering piston for regulating a passage channel in a passage bore, **characterized in that** a labyrinth-like section is provided in the passage bore, wherein the labyrinth-like section is formed by a profile (5) on the sealing surface (2) of the metering piston (1), and wherein a corresponding profile (6) is provided on the opposing housing wall (4) of the sand-passage opening (3).

2. Metering device according to claim 1, **characterized in that** the labyrinth-like section runs crosswise to the direction of flow-through.

3. Metering device according to claim 1, **characterized in that** when arranging the sealing profile (5 and 6), there is an overlapping between housing and sealing profile (5 and 6) both on the housing (4) and the metering piston (2) during the opening stroke of the metering piston.

4. Metering device according to claim 3, **characterized in that** when arranging the sealing profile (5 and 6), there is an overlapping between housing and sealing profile (5 and 6) both on the housing (4) and the metering piston (2) during the maximum opening stroke of the metering piston.

## Revendications

1. Dispositif de dosage pour appareils de sablage, notamment pour véhicules ferroviaires, destiné à déposer du produit de sablage entre la roue et le rail en utilisant un piston doseur coulissant régulant le canal d'écoulement dans un alésage d'écoulement,
**caractérisé en ce que**
une partie en forme de labyrinthe est prévue dans l'alésage d'écoulement, la partie en forme de labyrinthe étant réalisée par un profil (5) aménagé à la face d'étanchéité (2) du piston doseur (1) et un profil conjugué (6) aménagé dans la paroi opposée (4) du carter de l'ouverture d'écoulement de sable (3).

2. Dispositif de dosage selon la revendication 1,
**caractérisé en ce que**
la partie en forme de labyrinthe s'étend transversalement à la direction d'écoulement.

3. Dispositif de dosage selon la revendication 1,
**caractérisé en ce que**
lorsque le profil d'étanchéité (5 ou 6) est aménagé à la fois dans le carter (4) et sur le piston doseur (2), un recouvrement existe entre le profil du carter et le profil d'étanchéité (5 ou 6) pendant la course d'ouverture du piston doseur.

4. Dispositif de dosage selon la revendication 3,
**caractérisé en ce que**
lorsque le profil d'étanchéité (5 ou 6) est aménagé à la fois dans le carter (4) et sur le piston doseur (2), un recouvrement existe entre le profil du carter et le profil d'étanchéité (5 ou 6) même à la course d'ouverture maximale du piston doseur.
